# EUROPÄISCHE PATENTSCHRIFT

(11) **EP 1 791 618 B1**
(45) Veröffentlichungstag und Bekanntmachung des Hinweises auf die Patenterteilung: **18.01.2012**
(21) Anmeldenummer: 05781855.1
(22) Anmeldetag: 11.08.2005
(51) Int. Cl.: B01D 45/00, B01D 47/00, B01D 50/00, B01D 19/00

(54) **APPARAT ZUM ABTRENNEN VON AUS EINER PRODUKTFLÜSSIGKEIT AUFSTEIGENDEM BRÜDEN**
APPARATUS FOR SEPARATING VAPOR RISING FROM A PRODUCT LIQUID
APPAREIL PERMETTANT DE SEPARER LES VAPEURS EMANANT D'UN LIQUIDE PRODUIT

(30) Priorität: 11.08.2004 DE 102004039043
(43) Veröffentlichungstag der Anmeldung: 06.06.2007
(73) Patentinhaber: GEA Wiegand GmbH, D-76275 Ettlingen (DE)
(72) Erfinder: DECKER, Heinz, 76744 Wörth (DE)
(74) Vertreter: Liska, Horst
(86) Internationale Anmeldenummer: PCT/EP2005/008765
(87) Internationale Veröffentlichungsnummer: WO 2006/018235

(56) Entgegenhaltungen:
- US-A- 1 917 606
- US-A- 1 920 437
- US-A- 1 970 783
- US-A- 1 970 784
- US-A- 2 037 426
- US-A- 2 163 095
- US-A- 2 440 860
- US-A- 2 903 087
- US-A- 4 015 960

## Beschreibung

Die Erfindung betrifft einen Entspannungsverdampfer zum Abtrennen von aus einer überhitzten Produktflüssigkeit aufsteigendem Entspannungsbrüden und Aufkonzentrierung der Produktflüssigkeit.

In einer Vielzahl Prozesse fallen heiße Produktflüssigkeiten an, die durch Entspannungskühlung von Temperaturen oberhalb ihrer Siedetemperatur auf die Siedetemperatur gekühlt und aufkonzentriert werden. Es ist bekannt zur Entspannungskühlung Schwerkraftabscheider einzusetzen, in welchen der bei der Abkühlung entstehende Entspannungsbrüden von der auf Siedetemperatur sich abkühlenden Produktflüssigkeit getrennt wird. Bei herkömmlichen Schwerkraftabscheidem muss die Brüdenaufstiegsgeschwindigkeit in dem Behälter des Schwerkraftabscheiders so gering gewählt werden, dass beim Entspannungsvorgang mitgerissene Feinsttröpfchen oder Kleinstpartikel nicht gegen die Schwerkraft mit dem Brüden nach oben aufsteigen und zusammen mit dem Brüden aus dem Behälter ausgetragen werden. Der abgetrennte Brüden soll möglichst wenig mit dem Produkt kontaminiert sein. Um eine hinreichende Brüdenqualität sicherzustellen, waren herkömmliche zum Abtrennen der Brüden benutzte Schwerkraftabscheider voluminös und hatten speziell bei Vakuumbetrieb zum Teil sehr große Durchmesser. Es hat sich aber gezeigt, dass selbst bei großzügig bemessener Dimensionierung die Abscheidegüte in einer Vielzahl Anwendungsfälle nicht ausreichend war.

Zur Verbesserung der Abscheidegüte ist es bekannt zusätzliche Abscheider z.B. in Form von Demistern dem Schwerkraftabscheider nachzuschalten, was jedoch abhängig von dem mit dem Brüden mitgerissenen Produkt den Wartungs- und Reinigungsaufwand zum Teil beträchtlich erhöht hat.

Bei sehr großvolumigen Apparaten ist es ferner bekannt im oberen Bereich des Behälters des Schwerkraftabscheiders einen Ringraumabscheider anzuordnen. Da der Ringkanal des Ringraumabscheiders zu Reinigungszwecken begehbar sein muss, hat er einen vergleichsweise großen Kanalquerschnitt und dementsprechend ist die Strömungsgeschwindigkeit der Brüden in diesem Kanal gering, was die zusätzliche Abscheidewirkung begrenzt.

Auf dem Gebiet der Abtrennung von Flüssigkeiten aus Gasen ist es bekannt, (US 1 970 783) das flüssigkeitsbeladene Gas in den unteren Bereich eines zylindrischen Behälters eines Schwerkraftabscheiders einzuleiten, der im oberen Bereich des Behälters übereinander angeordnet zwei Zentrifugalabscheider enthält. Die Zentrifugalabscheider haben jeweils ein zylindrisches Gehäuse mit radialen Einlassöffnungen, durch die das Gas über einen Ringspalt zwischen dem Gehäuse und dem Behälter eintreten kann. Das Gehäuse enthält ein spiralförmiges Leitblech, das das Gas zum Zentrum des Zentrifugalabscheiders lenkt.

Aus US 2 163 095 ist ein Gas-ÖI-Separator für die Entgasung insbesondere von Erdöl bekannt. Der Separator umfasst einen vertikalen zylindrischen Behälter, der durch eine Trennwand in einen oberen und einen unteren Bereich unterteilt ist. Ein gleichfalls zylindrisches Gehäuses eines Zentrifugalabscheiders durchsetzt die Trennwand koaxial und hat in seinem in den unteren Bereich des Behälters hineinragenden Abschnitt mehrere trichterförmige Öffnungen, die durch eine zylindrische Schürze gegenüber den auf gleicher Höhe in der Wand des Behälters angeordneten Einlassöffnungen für das gasbeladene Öl abgeschirmt sind. Im Bereich des Bodens des Behälters ist ein Ölauslass angeordnet. Oberhalb der Trennwand ist der Zentrifugalabscheider mehrstufig ausgebildet, wobei jeder der zueinander konzentrischen Abscheiderstufen eine gesonderte, in den unteren Bereich des Behälters führende Drainageleitung zugeordnet ist.

Ein weiterer ÖI-Gas-Separator ist aus US 2 903 087 bekannt. Der Separator hat einen kugelförmigen Behälter, dem das zu entgasende Öl in einer horizontalen Durchmesserebene zugeführt wird, in der in einem abgetrennten Ringraum vertikale Prallstäbe und horizontale Prallplatten angeordnet sind. Das an den Prallstäben bzw. Prallplatten abgestreifte Öl fließt in den unteren Bereich des Kugelbehälters, während das Gas über einen Zentrifugalabscheider im oberen Bereich des Kugelbehälters abströmt.

Es ist Aufgabe der Erfindung, einen Entspannungsverdampfer zum Abtrennen von aus einer überhitzten Produktflüssigkeit aufsteigendem Entspannungsbrüden und Aufkonzentrierung der Produktflüssigkeit zu schaffen, der vergleichsweise kleine Abmessungen hat und dennoch in der Lage ist, den Brüden mit vergleichsweise geringer Produktkontamination von der Produktflüssigkeit abzutrennen.

Der Entspannungsverdampfer ist durch die in Anspruch 1 angegebenen Merkmale gekennzeichnet.

Der Entspannungsverdampfer umfasst einen Schwerkraftabscheider in Form eines geschlossenen Behälters mit einem Zufluss für Produktflüssigkeit und einem Abfluss für aufkonzentrierte Produktflüssigkeit jeweils in einem unteren Bereich des Behälters und einen in einem oberen Bereich des Behälters den Brüden aufnehmenden, den abgetrennten Brüden liefernden Nachabscheider.

Der Nachabscheider ist als Zentrifugalabscheider ausgebildet, dessen seinen Abscheideraum nach außen begrenzendes Gehäuse zumindest mit seinem unteren Bereich innerhalb des Behälters angeordnet ist und dort im oberen Bereich des Behälters wenigstens eine Einlassöffnung für den aus dem unteren Bereich des Behälters aufsteigenden Brüden aufweist, wobei das Gehäuse zumindest im Bereich der wenigstens eine Einlassöffnung im Abstand von dem Behälter verläuft.

Ein solcher Apparat trennt die Funktion der Entspannungsverdampfung von der Funktion der Abscheidung mitgerissener Tröpfchen und Partikel des Produkts innerhalb des Verdampfers. Die Produktflüssigkeit wird im unteren Bereich des Behälters zugeführt und hier erfolgt auch die EntspannungsVerdampfung. Im unteren Bereich des Behälters muss anders als bei herkömmlichen Entspannungsverdampfern kein übermäßiges Gewicht auf Verringerung des vom Brüden mitgerissenen Produktanteils gelegt werden. Insbesondere erlaubt der erfindungsgemäße Entspannungsverdampfer im unteren Bereich des Behälters höhere Brüdengeschwindigkeiten und es sind Behälter mit deutlich geringerem Durchmesser verwendbar. Die Dimensionierung des Schwerkraftabscheiders erfolgt in erster Linie unter dem Aspekt für eine gewünschte Flüssigkeitsbelastung eine ausreichende Ausdampfoberfläche und Ausdampfzeit sicherzustellen.

Die Abtrennung mitgerissener Produktanteile von dem Brüden erfolgt in dem im oberen Bereich des Behälters angeordneten Zentrifugalabscheider. Da die Brüdengeschwindigkeit in dem Zentrifugalabscheider unabhängig von der Brüdengeschwindigkeit in dem Schwerkraftabscheider eingestellt werden kann, lässt sich eine optimale Abscheidequalität erreichen.

Da das Gehäuse des Zentrifugalabscheiders zumindest teilweise in dem Behälter des Schwerkraftabscheiders untergebracht ist, hat der erfindungsgemäße Entspannungsverdampfer vergleichsweise kleines Bauvolumen, was nicht zuletzt die Herstellungskosten des Entspannungsverdampfers verringert und auch eine schwächere Dimensionierung eines gegebenenfalls vorhandenen Traggerüsts des Verdampfers erlaubt. Der Behälter des Schwerkraftabscheiders und das Gehäuse des Zentrifugalabscheiders enthalten im Wesentlichen keine zur Verschmutzung neigende Einbauten und sind überdies leicht zugänglich.

Das Gehäuse des Zentrifugalabscheiders hat zumindest angenähert Zylinderform und ist mit im Wesentlichen vertikaler Zylinderachse angeordnet. Die wenigstens eine Einlassöffnung ist in einem in radialem Abstand von dem Behälter verlaufenden Bereich einer Umfangswand des Gehäuses vorgesehen. Die Umfangswand des Gehäuses verläuft im Inneren des Behälters allseitig im Abstand von dessen Umfangswand, zumal in Umfangsrichtung verteilt mehrere Einlassöffnungen vorgesehen sein können. Zwischen den sich radial gegenüberstehenden Umfangswänden des Gehäuses und des Behälters entsteht auf diese Weise innerhalb des Behälters ein Ringspalt, in welchem der Brüden aufsteigen und in das Gehäuse des Zentrifugalabscheiders eintreten kann. Der Ringspalt erhöht auf diese Weise die für die Schwerkraftabscheidung verfügbare Abtrennzeit.

Die Einlassöffnung ist durch einen in Umfangsrichtung des Gehäuses offenen Einlasstrichter gebildet, der den im Behälter axial aufsteigenden Brüden in Umfangsrichtung des Gehäuses umlenkt. Durch diese Maßnahme kann die Abscheidewirkung des Zentrifugalabscheiders erhöht werden. Die Einlassöffnung hat die Form eines in Richtung der Zylinderachse langgestreckten Schlitzes, so dass im Wesentlichen die gesamte axiale Einstecktiefe, mit der das Gehäuse des Zentrifugalabscheider in den Behälter des Schwerkraftabscheiders hineinreicht, für die Überleitung der Brüden genutzt werden kann.

Der Einlasstrichter kann sich nach radial außen über die Zylinderkontur der Umfangswand des Gehäuses erheben. Der Einlasstrichter lässt sich mit geringerem Aufwand herstellen, wenn der radial innere Schlitzrand der Einlassöffnung innerhalb der Zylinderkontur des Gehäuses verläuft, da dann eine Einlaufwand des Einlasstrichters integral aus der Umfangswand des Gehäuses geformt werden kann.

Der Behälter des Schwerkraftabscheiders hat zumindest in seinem oberen Bereich im Wesentlichen Zylinderform und umschließt den die Einlassöffnung enthaltenden unteren Bereich der Umfangswand des Gehäuses des Zentrifugalabscheiders im Wesentlichen konzentrisch und in Umfangsrichtung allseitig mit radialem Abstand. Dies erlaubt insbesondere bei mehreren in Umfangsrichtung verteilten Einlassöffnungen gleichmäßiges Überführen der Brüden aus dem Behälter in das Gehäuse des Zentrifugalabscheiders.

Das Gehäuse des Zentrifugalabscheiders ragt nach oben über den Behälter hinaus. Aus Gründen der Materialeinsparung genügt es, wenn der Behälter lediglich den Bereich der Einlassöffnungen des Gehäuses überdeckt. Zweckmäßigerweise ist der Auslassanschluss für den abgetrennten Brüden oberhalb des Behälters an dem Gehäuse des Zentrifugalabscheiders vorgesehen. Bei dem Auslassanschluss kann es sich um einen tangential an die Umfangswand des Gehäuses anschließenden Anschluss handeln; der Auslassanschluss kann aber auch zentrisch in einer oberen Dachwand des Gehäuses vorgesehen sein.

Das Gehäuse weist zweckmäßigerweise oberhalb des Behälters eine mit einem abnehmbaren Deckel verschlossene Reinigungsöffnung, insbesondere eine Mannloch-Öffnung auf. Eine solche Mannloch-Öffnung kann auch an dem Behälter des Schwerkraftabscheiders vorgesehen sein.

In dem Zentrifugalabscheider anfallender Produktmitriss wird bevorzugt in den Behälter des Schwerkraftabscheiders zurückgeführt. In einer unteren Bodenwand des Gehäuses kann hierzu eine in den Behälter führende Auslassöffnung vorgesehen sein. Zweckmäßigerweise schließt sich an die Auslassöffnung ein in den unteren Bereich des Behälters und unterhalb des Produkt-Zuflussniveaus führendes Auslassrohr an. Dadurch wird verhindert, dass aufsteigender Brüden und damit Produktanteile unmittelbar über diese Öffnung in den Zentrifugalabscheider eintreten.

In der unteren Bodenwand des Gehäuses ist bevorzugt eine der Umfangswand benachbart folgende Sammelrinne gebildet, in der die Auslassöffnung vorgesehen ist. Die Sammelrinne umschließt einen vom Abscheideraum her gesehen konvexen Bereich der Bodenwand und verhindert zusammen mit diesem konvexen Bereich, dass die Zentrifugalwirkung die in der Sammelrinne geführte Produktflüssigkeit absaugt.

Zum Zuführen der Produktflüssigkeit kann im unteren Bereich des Behälters ein nach oben offenes Zuflussrohr münden, über dessen Mündung ein die zugeführte Produktflüssigkeit nach unten lenkender Prallteller angeordnet ist. In einer bevorzugten Ausgestaltung ist der Prallteller durch eine untere Bodenwand des Gehäuses des Zentrifugalabscheiders gebildet, was die Konstruktion vereinfacht und die Gesamtabmessungen des Apparats verringert.

Alternativ kann im unteren Bereich des Behälters auch ein im Wesentlichen tangential zur Umfangswand des Behälters verlaufendes Zuflussrohr für die Produktflüssigkeit münden. Bevorzugt haben das tangentiale Zuflussrohr und der Einlasstrichter gleiche Strömungsrichtung, da dann die Umlaufrichtung in dem Behälter die Zentrifugalströmung in dem Zentrifugalabscheider unterstützt.

Im Folgenden werden Ausführungsbeispiele der Erfindung anhand einer Zeichnung näher erläutert. Hierbei zeigt:
Fig. 1 einen schematischen Axiallängsschnitt durch einen Entspannungsverdampfer zum Abtrennen von aus einer Produktflüssigkeit aufsteigender Brüden gemäß der Erfindung;
Fig. 2 einen Axialquerschnitt durch den Verdampfer, gesehen entlang einer Linie II-II in Fig. 1;
Fig.3 einen schematischen Axiallängsschnitt durch eine Variante des Verdampfers aus Fig. 1;
Fig.4 eine schematische, teilweise im Axiallängsschnitt aufgebrochene Seitenansicht auf eine Variante des Verdampfers aus Fig. 1;
Fig. 5 eine Draufsicht auf den Apparat gesehen in Richtung eines Pfeils V in Fig. 4;
Fig. 6 einen Axialquerschnitt durch den Verdampfer; gesehen entlang einer Linie VI-VI in Fig. 4 und
Fig. 7 einen Axialquerschnitt durch den Verdampfer, gesehen in einer Linie VII-VII in Fig. 4.

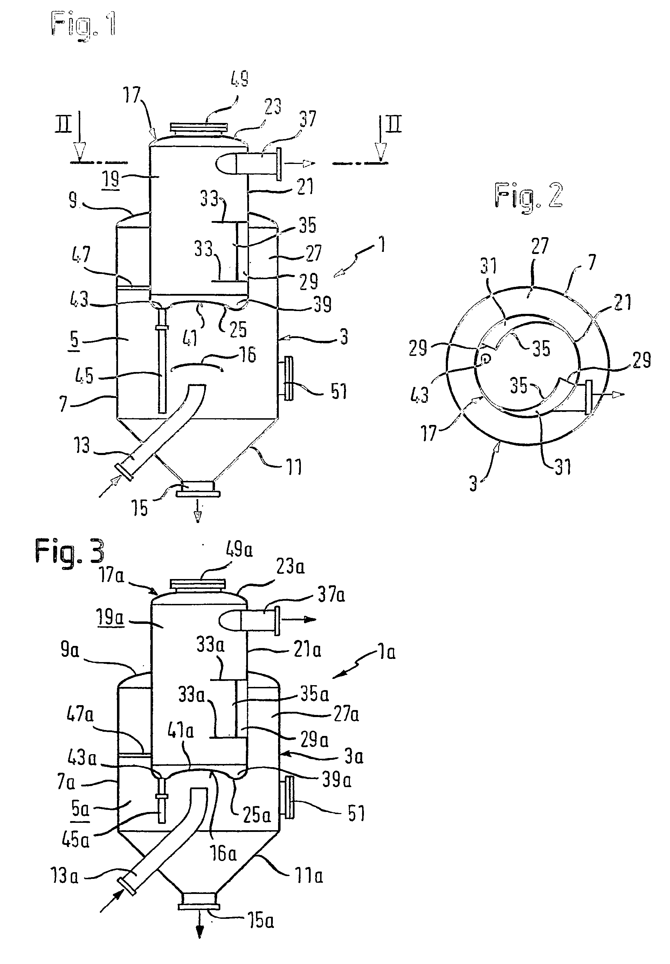

Die Fig. 1 und 2 zeigen einen Apparat 1 eines Entspannungsverdampfers, mit dem aus einer Produktflüssigkeit bei deren Entspannungskühlung aufsteigender Brüden abgetrennt werden kann. Der Apparat 1 umfasst einen Schwerkraftabscheider 3 mit einem geschlossenen Behälter 5, dessen mit vertikaler Achse angeordnete, zylindrische Umfangswand 7 an ihrem oberen Ende durch eine Dachwand 9 und an ihrem unteren Ende durch eine konische, nach unten sich verjüngende Bodenwand 11 abgeschlossen ist. Im unteren Bereich des Behälters 5 mündet zentrisch ein oben offenes Zuflussrohr 13 für Produktflüssigkeit. Am unteren Ende der Bodenwand 11 ist ein Auslassanschluss 15 für durch die Entspannungskühlung aufkonzentrierte Produktflüssigkeit vorgesehen. Die Produktflüssigkeit wird heiß bei einer über ihrer Siedetemperatur liegenden Temperatur über das Zuflussrohr 13 in den Behälters 5 eingeführt und von einem über der Mündung des Zuflussrohrs 13 angeordneten Prallteller 16 nach unten umgelenkt. Durch Entspannungsverdampfung in dem Behälter 5 wird die Produktflüssigkeit auf ihre Siedetemperatur oder gegebenenfalls darunter abgekühlt und verlässt den Behälter 5 in aufkonzentrierter Form über den Auslassanschluss 15.

Die bei der Entspannungsverdampfung entstehenden Brüden steigen in dem Behälter 5 nach oben und werden in einem im oberen Bereich des Behälters 5 angeordneten Zentrifugalabscheider 17 von Produktanteilen, wie z.B. Tröpfchen oder Partikel, die in der Brüdenströmung von unten nach oben mitgerissen wurden, getrennt. Der Zentrifugalabscheider 17 hat ein die Dachwand 9 des Behälters 5 durchdringendes Gehäuse 19 mit einer zylindrischen, gleichachsig zum Behälter 5 angeordneten Umfangswand 21, die nach oben durch eine Dachwand 23 und nach unten durch eine Bodenwand 25 abgeschlossen ist. Das Gehäuse 19 greift mit seinem unteren Bereich unter Bildung eines Ringraums 27 in den innenraum des Behälters 5 ein und hat in dem im Behälter 5 gelegenen Bereich seiner Umfangswand mehrere, hier zwei in Umfangsrichtung offene, im Wesentlichen über die gesamte axiale Höhe des im Behälter 5 sich befindenden Bereichs sich erstreckende Einlassschlitze 29, über die der bis in den Ringraum 27 aufsteigende Brüden in das Gehäuse 19 des Zentrifugalabscheiders 17 eintreten kann. Die Einlassschlitze 29 werden jeweils durch einen in Umfangsrichtung gerichteten Einlasstrichter 31 gebildet, der in die zylindrische Außenkontur der Umfangswand 21 des Gehäuses 19 radial eingesenkt ist. Ein durch Umfangsschnitte 33 der Umfangswand 21 freigeschnittener Lappen 35 ist hierzu radial nach innen eingewölbt und entlang der Schnitte 33 gegebenenfalls zu den axial angrenzenden Bereichen der Umfangswand 21 hin verschlossen. Die Einlasstrichter 31 lenken den in die Einlaßschlitze 29 des Gehäuses 19 eintretenden Brüdenstrom in Umfangsrichtung und verbessern so die Zentrifugalströmung in dem Zentrifugstabscheider 17.

Das Gehäuse 19 erstreckt sich nach oben über die Dachwand 9 des Behälters 5 hinaus und trägt an seinem oberen Ende einen Tangentialanschlussstutzen 37, der in Richtung der Tangentialströmung der Brüden von der Umfangswand 21 absteht. Anstelle des Tangential-Anschussstutzens 37 kann auch ein zentrischer Anschluss in der Dachwand 23 vorgesehen sein.

Die Bodenwand 25 des Gehäuses 19 hat an ihrem Außenumfang der Umfangswand 21 benachbart eine Sammelrinne 39, die einen vom Innenraum des Gehäuses 19 her gesehen konvexen Bodenbereich 41 umschließt. Der Bodenbereich 41 leitet von dem Zentrifugalabscheider 17 abgetrennte Produktflüssigkeit radial zur Sammelrinne 39 hin, wo sie über ein an eine Abflussöffnung 43 anschließendes, nach unten bis unter die Mündung des Zuflussrohrs 13 führendes Abflussrohr 45 der Produktflüssigkeit im unteren Bereich des Behälters 5 wieder zugeführt wird. Das Rohr 45 verhindert, dass Produktflüssigkeit und Brüden von unten her direkt in den Zentrifugalabscheider 17 eintreten.

Das Gehäuse 19 ist durch mehrere in Umfangsrichtung verteilte Tangentialstege 47, von denen Fig. 1 lediglich einen zeigt, an dem Behälter 5 gehalten. In der Dachwand 23 des Gehäuses 19 ist eine durch einen abnehmbaren Deckel zerschossene Mannloch-Öffnung 49 vorgesehen, über die das Gehäuse 19 gereinigt werden kann. Eine weitere durch einen abnehrnbaren Deckel verschlossene Mannloch-Öffnung 51 ist im unteren Bereich der Umfangswand 7 des Behälters 5 für dessen Reinigung vorgesehen.

Der Apparat 1 hat vergleichsweise geringe Abmessungen, da ein Teil des Gehäuses 19 in dem Behälter 5 untergebracht ist. Der aufsteigende Brüden wird über den zwischen der Umfangswand 21 des Gehäuses 19 und der Umfangswand 7 des Behälters 5 gebildeten Ringspalt 27 dem Zentrifugalabscheider 17 zugeführt. Da auf diese Weise die Strömungsgeschwindigkeiten des in dem Behälter 5 aufsteigenden Brüdens einerseits und des in dem Gehäuse 19 zentrifugal strömenden Brüden andererseits unabhängig voneinander bemessen werden können, kann der über den Ausgangsanschluss 37 austretende Brüden weitgehend von mitgerissenen Produktanteilen befreit werden.

Im Folgenden werden Varianten des anhand der Fig. 1 und 2 erläuterten Apparats beschrieben. Gleich wirkende Komponenten sind mit vorangegangen erläuterten Bezugszahlen und zur Unterscheidung mit einem Buchstaben versehen. Zur Erläuterung des Aufbaus und der Wirkungsweise einschließlich evtl. Varianten wird auf die jeweils vorangegangene Beschreibung Bezug genommen.

Der Apparat 1a unterscheidet sich von dem Apparat 1 der Fig. 1 und 2 im Wesentlichen nur dadurch, dass das Gehäuse 19a des Zentrifugalabscheiders 17a soweit nach unten zur Mündung des Zuflussrohrs 13a hin verlängert oder/und dieses Rohr soweit nach oben reicht, dass der von innerhalb des Gehäuses 19a konvexe Bereich 41 a der Bodenwand 25a mit seiner konkaven Außenfläche zugleich den Prallteller 16a bildet. Auf diese

Weise kann der Apparat 1a noch kompakter gebaut werden.

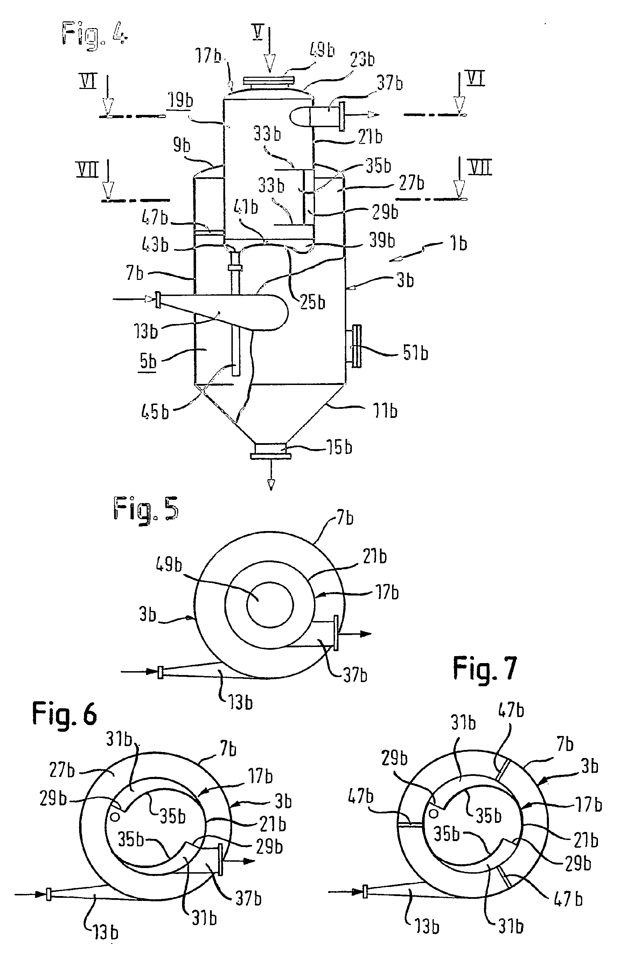

Der Apparat 1b der Fig. 4 bis 7 unterscheidet sich von dem Apparat 1 der Fig. 1 und 2 im Wesentlichen nur dadurch, dass anstelle des im unteren Bereich des Behälters 5 zentrisch einmündende und von oben her durch einen Prallteller 16 überdecke Zuflussrohr 13 für die Produktflüssigkeit durch ein im unteren Bereich des Behälters 5b tangential in dessen Umfangswand 7b einmündendes Zuflussrohr 13b ersetzt ist. Der Richtungssinn der tangentialen Einströmrichtung des Zuftussrohrs 13b ist gleich dem durch die Einlasstrichter 31b des Gehäuses 19b des Zentrifugalabscheiders 17b festgelegten tangentialen Richtungssinn der Brüden und ist ferner gleich dem tangentialen Ausströmrichtungssinn des Auslassanschlusses 37b. Im übrigen entspricht der Apparat 1b dem Apparat 1 der Fig. 1 und 2.

## Patentansprüche

1. Entspannungsverdampfer zum Abtrennen von aus einer überhitzten Produktflüssigkeit aufsteigendem Entspannungsbrüden und Aufkonzentrierung der Produktflüssigkeit, umfassend
- einen Schwerkraftabscheider (3) in Form eines geschlossenen, zumindest in seinem oberen Bereich zylinderförmigen Behälters (5) mit einem Zufluss (13) für Produktflüssigkeit und einem Abfluss (15) für aufkonzentrierte Produktflüssigkeit jeweils in einem unteren Bereich des Behälters (5) und
- einen in einem oberen Bereich des Behälters (5) den aufsteigenden Entspannungsbrüden aufnehmenden, den abgetrennten Brüden liefernden weiteren Abscheider,
**dadurch gekennzeichnet, dass** der weitere Abscheider als Zentrifugalabscheider (17) ausgebildet ist, dessen Abscheideraum mit seinem den Abscheideraum nach außen begrenzenden, zumindest angenähert zylinderförmigen Gehäuse (19) zumindest mit seinem unteren Bereich mit vertikaler Zylinderachse innerhalb des Behälters (5) angeordnet ist und dort im oberen Bereich des Behälters (5) in einer Umfangswand (21) des Gehäuses (19) wenigstens eine Einlassöffnung (29) für den aus dem unteren Bereich des Behälters (5) aufsteigenden Entspennungsbrüden aufweist, wobei die Umfangswand (21) wie auch die wenigstens eine Einlassöffnung (29) des Gehäuses (19) im Inneren des Behälters (5) allseitig im Abstand von dessen Umfangswand (7) verläuft,
wobei das Gehäuse (19) des Zentrifugalabscheiders (17) nach oben über den Behälter (5) herausragt und im Wesentlichen keine Einbauten enthält, und wobei die wenigstens eine Einlassöffnung als über die gesamte Eintauchtiefe, mit der das Gehäuse (19) in den Behälter (5) hineinreicht, sich erstreckender, in Richtung der Zylinderachse langgestreckter, in Umfangsrichtung des Gehäuses (19) offener Einlassschlitz (29) ausgebildet ist, der über einen integralen wandlappen (35) der umfangswand (21) in die zylindrische Umfangswand (21) des Gehäuses (19) übergeht.

2. Entspannungsverdampfer nach Anspruch 1,
**dadurch gekennzeichnet, dass** der Einlassschlitz (29) mit seinem radial inneren Schlitzrand innerhalb der Zylinderkontur des Gehäuses (19) verläuft.

3. Entspannungsverdampfer nach Anspruch 1 oder 2,
**dadurch gekennzeichnet, dass** der zumindest in seinem oberen Bereich im Wesentlichen zylinderförmige Behälter (5) den wenigstens einen Einlassschlitz (29) enthaltenden unteren Bereich der Umfangswand (21) des Gehäuses (19) des Zentrifugalabscheiders (17) im Wesentlichen konzentrisch umschließt.

4. Entspannungsverdampfer nach einem der Ansprüche 1 bis 3,
**dadurch gekennzeichnet, dass** das Gehäuse (19) oberhalb des Behälters (5) mit einem Auslassanschluss (37) für den abgetrennten Brüden versehen ist.

5. Entspannungsverdampfer nach einem der Ansprüche 1 bis 4,
**dadurch gekennzeichnet, dass** das Gehäuse (19) oberhalb des Behälters (5) eine mit einem abnehmbaren Deckel verschlossene Reinigungsöffnung, insbesondere eine Mannloch-Öffnung (49), aufweist.

6. Entspannungsverdampfer nach einem der Ansprüche 1 bis 5,
**dadurch gekennzeichnet, dass** in einer unteren Bodenwand (25) des Gehäuses (19) eine in den Behälter (5) führende Flüssigkeitsauslassöffnung (43) vorgesehen ist, an die ein in den unteren Bereich des Behälters (5) und unterhalb des Produkt-Zuflussniveaus führendes Auslassrohr (45) anschließt.

7. Entspannungsverdampfer nach Anspruch 6,
**dadurch gekennzeichnet, dass** die untere Bodenwand (25) des Gehäuses (19) eine der Umfangswand (21) benachbart folgende Sammelrinne (39) bildet, in der die Flüssigkeitsauslassöffnung (43) vorgesehen ist.

8. Entspannungsverdampfer nach einem der Ansprüche 1 bis 7,
**dadurch gekennzeichnet, dass** im unteren Bereich des Behälters (5) ein nach oben offenes Zuflussrohr (13; 13a) für Produktflüssigkeit mündet, über dessen Mündung ein Prallteller (16; 16a) angeordnet ist.

9. Entspanhungsverdampfer nach Anspruch 8,
**dadurch gekennzeichnet, dass** der Prallteller (16a) durch eine untere Bodenwand (25a) des Gehäuses (19a) des Zentrifugalabscheiders (17a) gebildet ist.

10. Entspannungsverdampfer nach einem der Ansprüche 1 bis 9,
**dadurch gekennzeichnet, dass** im unteren Bereich des Behälters (5) ein im Wesentlichen tangential zur Umfangswand (7b) des Behälters (5b) verlaufendes Zuflussrohr (13b) für Produktflüssigkeit mündet.

11. Entspannungsverdampfer nach Anspruch 10,
**dadurch gekennzeichnet, dass** das tangentiale Zuflussrohr (13b) und die Einlassrichtung der Einlassöffnung (31 b) gleiche tangentiale Strömungsrichtung haben.

## Claims

1. A flash evaporator for separating flash vapours rising from a superheated product liquid and concentrating the product liquid, comprising
- a gravity separator (3) in the form of a closed container (5) cylindrical at least in its upper region and with an inflow (13) for product liquid and an outflow (15) for concentrated product liquid in each case in a lower region of the container (5) and
- a further separator accommodating the rising flash vapours in an upper region of the container (5) and delivering the separated vapours,
**characterised in that** the further separator takes the form of a centrifugal separator (17), whose separation chamber, with its at least approximately cylindrical housing (19) which outwardly defines the separation chamber, is arranged at least with its lower region with vertical cylinder axis inside the container (5) and there, in the upper region of the container (5), comprises at least one inlet opening (29) in a peripheral wall (21) of the housing (19) for the flash vapours rising from the lower region of the container (5), the peripheral wall (21) and the at least one inlet opening (29) of the housing (19) extending inside the container (5) on all sides at a distance from the peripheral wall (7) thereof,
the housing (19) of the centrifugal separator (17) projecting out upwards above the container (5) and containing substantially no internal fittings, and the at least one inlet opening taking the form of an inlet slit (29) extending over the entire depth by which the housing (19) reaches into the container (5), elongate in the direction of the cylinder axis and open in the circumferential direction of the housing (19), which inlet slit (29) merges via an integral wall flap (35) of the peripheral wall (21) into the cylindrical peripheral wall (21) of the housing (19).

2. A flash evaporator according to claim 1,
**characterised in that** the inlet slit (29) extends with its radially inner slit edge inside the cylindrical contour of the housing (19).

3. A flash evaporator according to claim 1 or claim 2,
**characterised in that** the container (5) which is substantially cylindrical at least in its upper region substantially concentrically surrounds the lower region, containing at least one inlet slit (29), of the peripheral wall (21) of the housing (19) of the centrifugal separator (17).

4. A flash evaporator according to any one of claims 1 to 3,
**characterised in that** the housing (19) is provided above the container (5) with an outlet port (37) for the separated vapours.

5. A flash evaporator according to any one of claims 1 to 4,
**characterised in that** above the container (5) the housing (19) comprises a cleaning opening closed with a removable lid, in particular a manhole opening (49).

6. A flash evaporator according to any one of claims 1 to 5,
**characterised in that** a liquid outlet opening (43) leading into the container (5) is provided in a lower base wall (25) of the housing (19), to which opening (43) is connected an outlet pipe (45) which leads into the lower region of the container (5) below the product inflow level.

7. A flash evaporator according to claim 6,
**characterised in that** the lower base wall (25) of the housing (19) forms a collecting channel (39) following the peripheral wall (21) adjacent thereto, in which channel (39) the liquid outlet opening (43) is provided.

8. A flash evaporator according to any one of claims 1 to 7,
**characterised in that** in the lower region of the container (5) there opens an inflow pipe (13; 13a) open at the top for product liquid, over the mouth of which there is arranged a baffle plate (16; 16a).

9. A flash evaporator according to claim 8,
**characterised in that** the baffle plate (16a) is formed by a lower base wall (25a) of the housing (19a) of the centrifugal separator (17a).

10. A flash evaporator according to any one of claims 1 to 9,
**characterised in that** an inflow pipe (13b) for product liquid extending substantially tangentially to the peripheral wall (7b) of the container (5b) opens in the lower region of the container (5).

11. A flash evaporator according to claim 10,
**characterised in that** the tangential inflow pipe (13b) and the inlet direction of the inlet opening (31b) have identical tangential directions of flow.

## Revendications

1. Vaporisateur à détente gazeuse pour la séparation des vapeurs de détente montant d'un liquide de produit surchauffé et la concentration du liquide de produit, comprenant
un séparateur à gravité (3) sous la forme d'un récipient (5) fermé, de forme cylindrique au moins dans sa zone supérieure, avec une arrivée (13) pour liquide de produit et une évacuation (15) pour le liquide de produit concentré, respectivement dans une zone inférieure du récipient (5) et
un séparateur supplémentaire recueillant la vapeur de détente montante dans une zone supérieure du récipient (5), fournissant la vapeur séparée,
**caractérisé en ce que** le séparateur supplémentaire est formé comme séparateur centrifuge (17), dont l'espace de séparation avec son enveloppe (19) au moins approximativement de forme cylindrique délimitant l'espace de séparation vers l'extérieur est disposé au moins avec sa zone inférieure à axe de cylindre vertical à l'intérieur du récipient (5) et y présente dans la zone supérieure du récipient (5) dans une paroi périphérique (21) de l'enveloppe (19) au moins un orifice d'entrée (29) pour la vapeur de détente montant de la zone inférieure du récipient (5), la paroi périphérique (21) ainsi que l'au moins un orifice d'entrée (29) de l'enveloppe (19) s'étendant à l'intérieur du récipient (5) à distance de sa paroi périphérique (7) sur tous les côtés, l'enveloppe (19) du séparateur centrifuge (17) dépassant vers le haut au-dessus du récipient (5) et ne contenant essentiellement pas de chicanes, et l'au moins un orifice d'entrée étant formé comme fente d'entrée ouverte (29) s'étendant sur toute la profondeur d'immersion avec laquelle l'enveloppe (19) pénètre dans le récipient (5), allongée dans la direction de l'axe du cylindre, ouverte dans la direction circonférentielle de l'enveloppe (19), qui évolue via une languette murale intégrale (35) de la paroi périphérique (21) vers la paroi périphérique cylindrique (21) de l'enveloppe (19).

2. Vaporisateur à détente gazeuse suivant la revendication 1, **caractérisé en ce que** la fente d'entrée (29) s'étend avec son bord de fente radial intérieur à l'intérieur du contour cylindrique de l'enveloppe (19).

3. Vaporisateur à détente gazeuse suivant la revendication 1 ou 2, **caractérisé en ce que** le récipient (5) de forme essentiellement cylindrique au moins dans sa zone supérieure (5) entoure de manière essentiellement concentrique la zone inférieure de la paroi périphérique (21) de l'enveloppe (19) du séparateur centrifuge (17) contenant l'au moins une fente d'entrée (29).

4. Vaporisateur à détente gazeuse suivant l'une des revendications 1 à 3, **caractérisé en ce que** l'enveloppe (19) est pourvue au-dessus du récipient (5) d'un raccordement de sortie (37) pour la vapeur séparée.

5. Vaporisateur à détente gazeuse suivant l'une des revendications 1 à 4, **caractérisé en ce que** l'enveloppe (19) présente au-dessus du récipient (5) une ouverture de nettoyage, en particulier une ouverture de trou d'homme (49), fermée par un couvercle amovible.

6. Vaporisateur à détente gazeuse suivant l'une des revendications 1 à 5, **caractérisé en ce qu'**un orifice de sortie de liquide (43) conduisant dans le récipient (5), à laquelle se raccorde un tuyau de sortie (45) conduisant dans la zone inférieure du récipient (5) et en dessous du niveau d'arrivée de produit, est prévue dans une paroi de fond inférieure (25) de l'enveloppe (19).

7. Vaporisateur à détente gazeuse suivant la revendication 6, **caractérisé en ce que** la paroi de fond inférieure (25) de l'enveloppe (19) forme une goulotte de collecte (39) suivant la paroi périphérique (21) à proximité de celle-ci, dans laquelle est prévu l'orifice de sortie de liquide (43).

8. Vaporisateur à détente gazeuse suivant l'une des revendications 1 à 7, **caractérisé en ce qu'**un tuyau d'arrivée (13; 13a) pour liquide de produit ouvert vers le haut débouche dans la zone inférieure du récipient (5), au-dessus de l'embouchure duquel est disposée une plaque de rebondissement (16; 16a).

9. Vaporisateur à détente gazeuse suivant la revendication 8, **caractérisé en ce que** la plaque de rebondissement (16a) est formée par une paroi de fond inférieure (25a) de l'enveloppe (19a) du séparateur centrifuge (17a).

10. Vaporisateur à détente gazeuse suivant l'une des revendications 1 à 9, **caractérisé en ce qu'**un tuyau d'arrivée (13b) pour liquide de produit s'étendant essentiellement tangentiellement à la paroi périphérique (7b) du récipient (5b) débouche dans la zone inférieure du récipient (5).

11. Vaporisateur à détente gazeuse suivant la revendication 10, **caractérisé en ce que** le tuyau d'arrivée tangentiel (13b) et la direction d'entrée de l'orifice d'entrée (31b) ont le même sens d'écoulement tangentiel.
